Europäisches Patentamt

European Patent Office

Office européen des brevets

(11) Veröffentlichungsnummer: **0 154 870**
A2

# (12) EUROPÄISCHE PATENTANMELDUNG

(21) Anmeldenummer: 85101985.1

(22) Anmeldetag: 22.02.85

(51) Int. Cl.⁴: **G 02 B 26/08**

(30) Priorität: 24.02.84 JP 34786/84

(43) Veröffentlichungstag der Anmeldung: 18.09.85
Patentblatt 85/38

(84) Benannte Vertragsstaaten: DE FR NL

(71) Anmelder: NGK Spark Plug Co. Ltd., 14-18,
Takatsuji-machi Mizuho-ku, J-Nagoya-shi, Aichi-ken (JP)
Anmelder: Hattori, Shuzo, No.42-1, Aza-Nusasizuka
Oaza-Nagakute, Nagakute-cho Aichi-gun Aichi-ken (JP)

(72) Erfinder: Wakita, Naomasa, No. 14-18, Takatsuji-cho
Mizuho-ku, Nagoya-shi Aichi-ken (JP)
Erfinder: Okuda, Makoto, No. 14-18, Takatsuji-cho
Mizuho-ku, Nagoya-shi Aichi-ken (JP)
Erfinder: Hattori, Shuzo, No. 42-1, Aza Nusashizuka
Oaza Nagakute, Nagakute-cho Aichi-gun Aichi-ken (JP)

(74) Vertreter: Walter, Helmut, Aubingerstrasse 81,
D-8000 München 60 (DE)

(54) Lichtablenkeinrichtung.

(57) Eine Lichtablenkeinrichtung ist offenbart, die ein kippbares Teil aufweist, das durch Punktabstützung getragen ist und eine reflektierende Spiegelfläche an seiner Oberseite aufweist, sowie piezoelektrische Stapel, die jeweils an senkrechten x- und y-Achsen vorgesehen sind, die einander am Unterstützungspunkt schneiden, sowie an Stellen, welche gegenüber diesem einen Abstand aufweisen, und die imstande sind, mit der Anlegung einer Spannung in Vertikalrichtung verlängert und verkürzt zu werden, wobei das verschiebliche Ende eines jeden piezoelektrischen Stapels mit dem kippbaren Teil gekoppelt ist, um die Kippbewegung der reflektierenden Spiegelfläche in einer gewünschten Richtung und in einem gewünschten Ausmaß um den Abstützpunkt zusammen mit der Verlängerung oder Verkürzung der piezoelektrischen Stapel zu ermöglichen.

Anmelder:

1. NGK Spark Plug Co., Ltd., No. 14-18, Takatsuji-cho, Mizuho-ku, Nagoya-shi, Aichi-ken, Japan

2. Shuzo Hattori, No. 42-1, Aza-Nusasizuka, Oaza-Nagakute, Nagakute-cho, Aichi-gun, Aichi-ken, Japan

## Lichtablenkeinrichtung

Diese Erfindung betrifft eine Lichtablenkeinrichtung zum Ablenken von Licht in eine gewünschte Richtung durch Kippen eines reflektierenden Spiegels in Richtung einer x- oder y-Achse einer Ebene, und zwar entsprechend der Anlegung eines elektrischen Signals.

Es ist eine Lichtablenkeinrichtung bekannt, bei welcher ein reflektierender Spiegel unter Verwendung einer bimorphen Zelle gekippt wird, wie dies in der JP-OS Sho 52-40215 offenbart ist. Fig. 6 zeigt die offenbarte Lichtablenkeinrichtung. Die Einrichtung weist eine bimorphe Zelle a auf, welche bei der Anlegung von Strom an diese gekrümmt wird. Die bimorphe Zelle a ist am einen Ende befestigt und am anderen Ende mit der Unterkante eines reflektierenden Spiegels b gekoppelt, wobei der reflektierende Spiegel b hierbei getragen und mit der Krümmung der Zelle, wie oben vermerkt, gekippt wird. Bei dieser Anordnung wird die Abstützung des reflektierenden Spiegels b und der Zelle a einzig und allein mit der Befestigung des Endes der Zelle bewirkt. Deshalb ist die mechanische Festigkeit der Anordnung gering, und die Zelle a unterliegt der Gefahr, bei der Aufbringung einer Kraft auf die Mitte der An-22. Februar 1985 ordnung zu Bruch zu geben. Um dem abzuhelfen, ist es erforderlich, die Belastung der Anordnung dadurch zu verringern, daß man die Dicke des reflektierenden Spiegels b verringert. Demzufolge unterliegt nun der reflektierende Spiegel b leicht der Gefahr, zu Bruch zu gehen, und ist außerdem schwierig zu handhaben. Ferner werden die Bedingungen zum Kippen des reflektierenden Spiegels b von verschiedenartigen Faktoren bestimmt, etwa der Spannung, die an die Zelle a angelegt wird, dem Abstand von dem befestigten Abschnitt der Zelle a zum abgestützten Abschnitt des reflektierenden Spiegels b, und dem Gewicht des reflektierenden Spiegels b. Bei so komplexen Bedingungen ist es schwierig, die gewünschte Lagegenauigkeit zu erreichen. Ferner kann eine große Neigung infolge einer Last auf dem Mittelteil der Anordnung, etwa dem reflektierenden Spiegel b, nicht erreicht werden.

Diese Erfindung hat zum Ziel, eine Lichtablenkeinrichtung vorzusehen, welche frei ist von den oben vermerkten Nachteilen. Gemäß der vorliegenden Erfindung wird das obige Ziel durch eine Anordnung erreicht, welche ein kippbares Teil aufweist, das durch Punktabstützung getragen ist und an dessen Oberseite eine reflektierende Spiegelfläche vorgesehen ist, sowie piezoelektrische Stapel, die jeweils an der senkrechten x- und y-Achse vorgesehen sind, welche sich am Unterstützungspunkt schneiden, sowie an Stellen mit Abstand hiervon angeordnet sind, und welche imstande sind, in Vertikalrichtung mit der Anlegung einer Spannung gelängt und verkürzt zu werden, und das verschiebliche Ende eines jeden der piezoelektrischen Stapel ist mit dem kippbaren Teil so verbunden, daß es die Kippbewegung der reflektierenden Spiegelfläche in einer gewünschten Richtung und in einem gewünschten Ausmaß um den Abstützungspunkt infolge der Längung oder Verkürzung der piezoelektrischen Stapel gestattet.

Die obigen und andere Ziele und Merkmale der Erfindung werden aus der nachfolgenden, detaillierten Beschreibung ersichtlich, welche in Verbindung mit den Zeichnungen vorgelegt wird, welche ein Ausführungsbeispiel der Erfindung darstellen.

Die beigefügten Zeichnungen stellen ein Ausführungsbeispiel der vorliegenden Erfindung dar; in diesem ist:

Fig. 1  eine Perspektivansicht des Ausführungsbeispiels,

Fig. 2  eine teilweise abgebrochene Draufsicht, die das Ausführungsbeispiel zeigt,

Fig. 3  eine Perspektivansicht in vergrößertem Maßstab, die einen wesentlichen Teil des Ausführungsbeispiels zeigt,

Fig. 4  die Ansicht eines Schnitts, der längs Linie A-A in Fig. 2 vorgenommen wurde,

Fig. 5  die Ansicht eines Schnitts, der längs Linie A-A in Fig. 2 vorgenommen wurde und die Wirkungsweise des Ausführungsbeispiels darstellt, und

Fig. 6  die Ansicht eines Längsschnitts, der eine Einrichtung aus dem Stand der Technik zeigt.

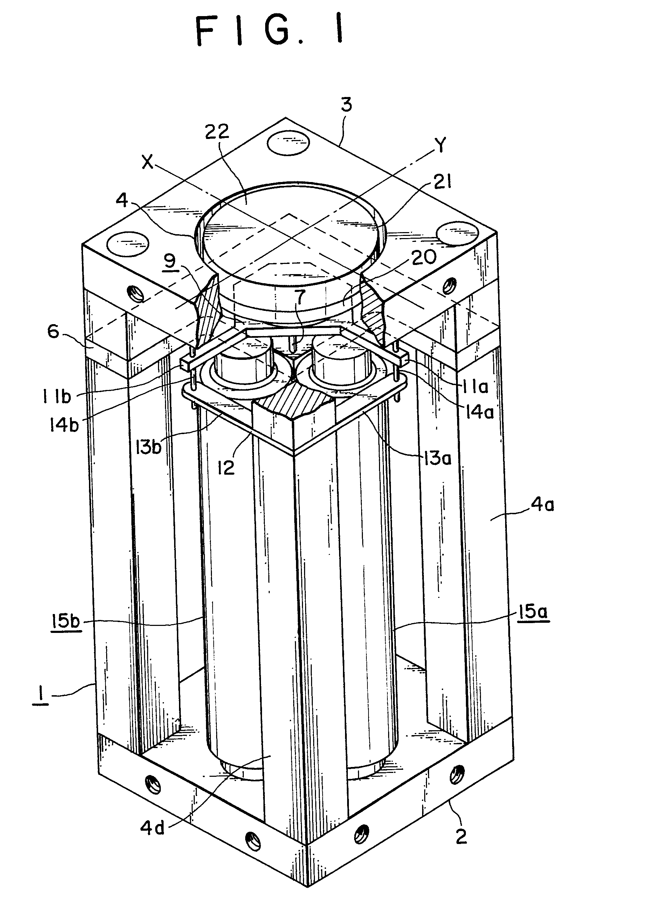

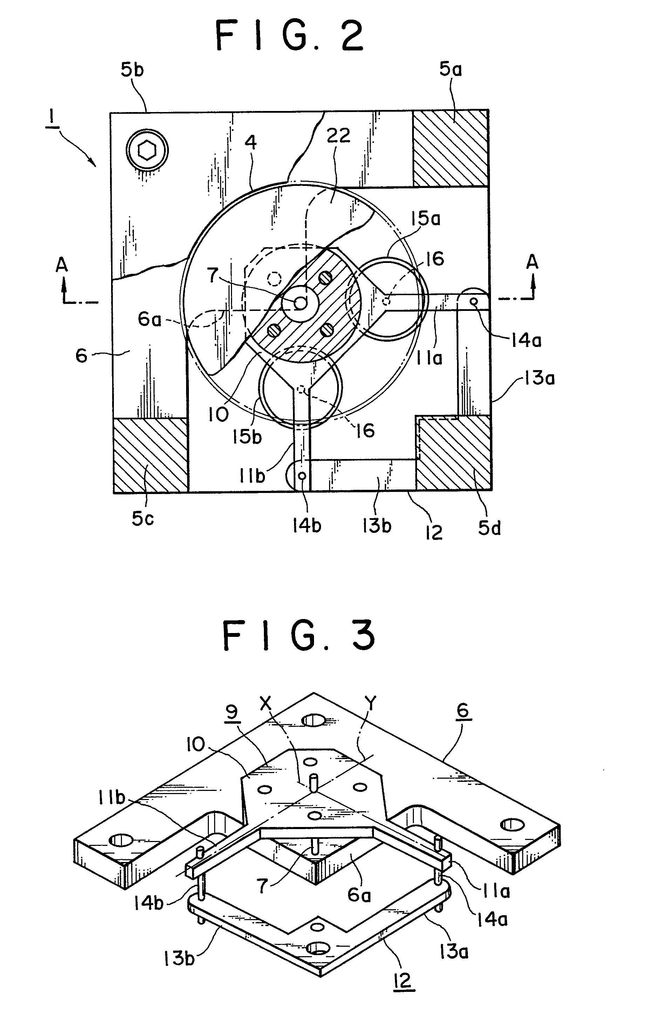

Es wird nun auf Fig. 1 Bezug genommen; das dargestellte Ausführungsbeispiel der vorliegenden Erfindung weist ein Gehäuse 1 auf, welches eine vierkantige bzw. quadratische Bodenplatte 2 und eine Oberplatte 3 mit derselben Form aufweist, die ein mittiges, kreisrundes Loch 4 aufweist, wobei die Ober- und Unterplatte 2 und 3 an ihren Ecken durch vier Verbindungspfosten 5a bis 5d zusammengehalten sind. Wie in den Fig. 2 und 3 gezeigt, ist eine im wesentlichen L-förmige Zwischenplatte 6 durch die verbundenen Pfosten 5a bis 5c gehalten. Sie weist einen integrierten, inneren, rechteckigen Stützabschnitt 6a auf, mit einem angespitzten Ende, welches in der Grundrißmitte des Gehäuses 1 angeordnet ist. Eine nadelartige Stützfeder 7 ragt von dem oben erwähnten, angespitzten Ende aus nach oben. Seine Lage fällt somit mit der Grundrißmitte des Gehäuses 1 zusammen.

Ein kippbares Teil 9 ist fest am oberen Ende der nadelartigen Stützfeder 7 getragen. Es weist einen Montageabschnitt 10 auf, der einen ortsfesten Vorsprung 20 trägt, der an der Oberseite hiervon angeschraubt ist, sowie zwei Verbindungsstababschnitte 11a und 11b, welche sich längs senkrechter x- und y-Achsen erstrecken, die sich am Abstützungspunkt der nadelartigen Abstützfeder 7 schneiden, wie in Fig. 1 gezeigt ist. Die Endabschnitte der Verbindungsstababschnitte 11a und 11b erstrecken sich jeweils zwischen den Verbindungspfosten 5a und 5d und zwischen den Verbindungspfosten 5c und 5d. Ein L-förmiges Federteil 12 mit senkrechten Blattfedervorsprüngen 13a und 13b ist durch den Verbindungspfosten 5d getragen, wobei das Ende des Blattfedervorsprungs 13a sich zum Verbindungspfosten 5a hin erstreckt und mit dem Verbindungsstababschnitt 11a über eine sich vertikal erstreckende, nadelartige Verbindungsfeder 14a verbunden ist, während das Ende des Blattfedervorsprungs 13b sich zum Verbindungspfosten 5c hin erstreckt und mit dem Verbindungsstababschnitt 11b über eine sich vertikal erstreckende, nadelartige Verbindungsfeder 14b gekoppelt ist. Die Verbindungsfedern 14a und 14b koppeln die Verbindungsstababschnitte 11a und 11b mit den Blattfederabschnitten 13a und 13b in vertikaler Richtung, während sie eine leichte Verformung in Querrichtungen gestatten.

Ein sich vertikal erstreckender, piezoelektrischer Stapel 15a ist an einer Stelle vorgesehen, welche im wesentlichen der Mitte zwischen der nadelartigen Stützfeder 7 und der nadelartigen Verbindungsfeder 14a entspricht. Ein anderer, sich vertikal erstreckender piezoelektrischer Stapel 15b ist an einer Stelle vorgesehen, welche im wesentlichen der Mitte zwischen der nadelartigen Stützfeder 7 und der nadelartigen Verbindungsfeder 14a entspricht. Diese piezoelektrischen Stapel 15a und 14b sind an der Bodenplatte 2 getragen, wobei sie mit ihrem unteren Ende hierin eingeschraubt sind. Sie haben jeweils Berührungskugeln 16, die an ihrem oberen Ende vorgesehen sind (welches das verschiebliche Ende ist). Diese Berührungskugeln stehen in Punktberührung mit der unteren ebenen Fläche des kippbaren Teils 9 an Stellen hiervon, welche auf der x- und y-Achse liegen.

Die Berührungskugeln 16 sind aus hartem Material hergestellt, welches aus jener Gruppe ausgewählt ist, das aus harten Metallen wie rostfreiem Stahl, Chrom und harten Keramikmaterialien besteht, wie Siliciumnitrid und Aluminiumoxid.

Die Bodenfläche des kippbaren Teiles 9, welche mit den Kugeln 16 in Berührung steht, ist mit Schichten 19 aus hartem Material versehen, welche aus demselben Material wie die Kugeln 16 hergestellt sind. Die Schichten 19 aus hartem Material sind dadurch gebildet, daß man flache Aussparungen t, die in Berührungsabschnitten der unteren Fläche ausgebildet sind, mit dem oben vermerkten Material ausfüllt. Die Schichten 19 aus hartem Material sind jedoch in jenem Fall nicht erforderlich, in welchem das gesamte kippbare Teil 9 aus demselben harten Material wie die Kugeln 16 hergestellt ist.

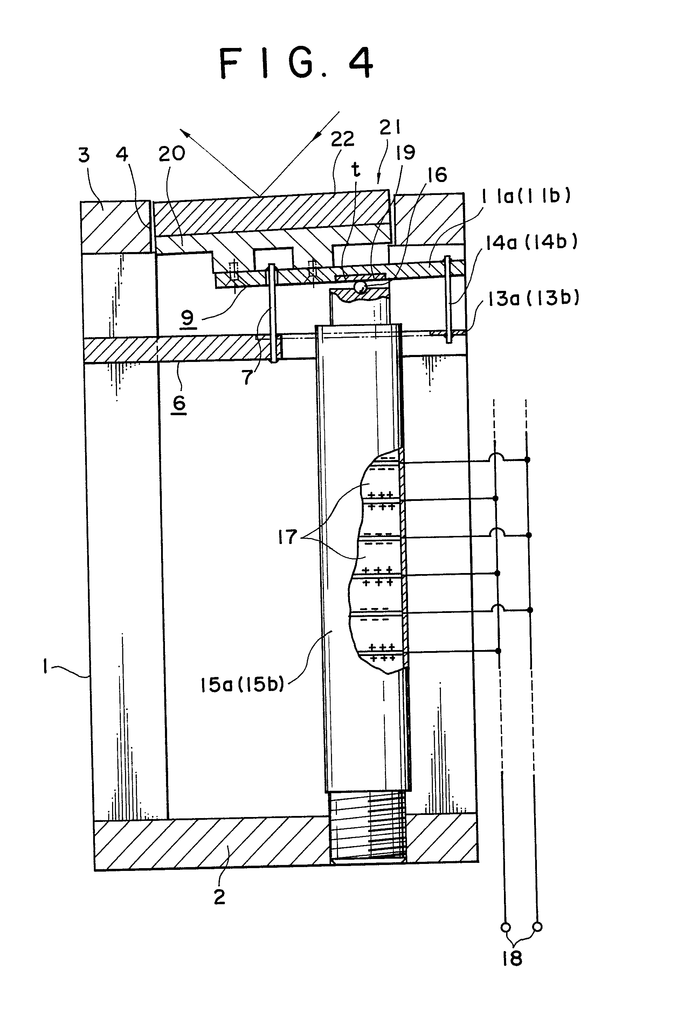

Die piezoelektrischen Stapel 15a und 15b, wie sie in Fig. 4 gezeigt sind, bestehen jeweils aus einer Anzahl piezoelektrischer Elemente 17, welche in vertikaler Richtung polarisiert sind. Jedes piezoelektrische Element 17 kann in vertikaler Richtung mit der Anlegung einer Spannung zwischen zwei Eingangsanschlüssen 18 gestreckt werden, von welchen jeder mit
gleichpoligen Elektroden der piezoelektrischen Elemente
verbunden ist. Die Summe der Verspannungen der einzelnen
piezoelektrischen Elemente erzeugt die Verlängerung
oder Verkürzung des piezoelektrischen Stapels in vertikaler Richtung.

Der ortsfeste Vorsprung 20, der am kippbaren Teil 9
angeschraubt ist, ist lose im kreisförmigen Loch 4
der Oberplatte 3 aufgenommen. Ein Spiegel 21 mit einer
reflektierenden Spiegelfläche 22 an seiner Oberseite
ist an dem ortsfesten Vorsprung 20 befestigt.

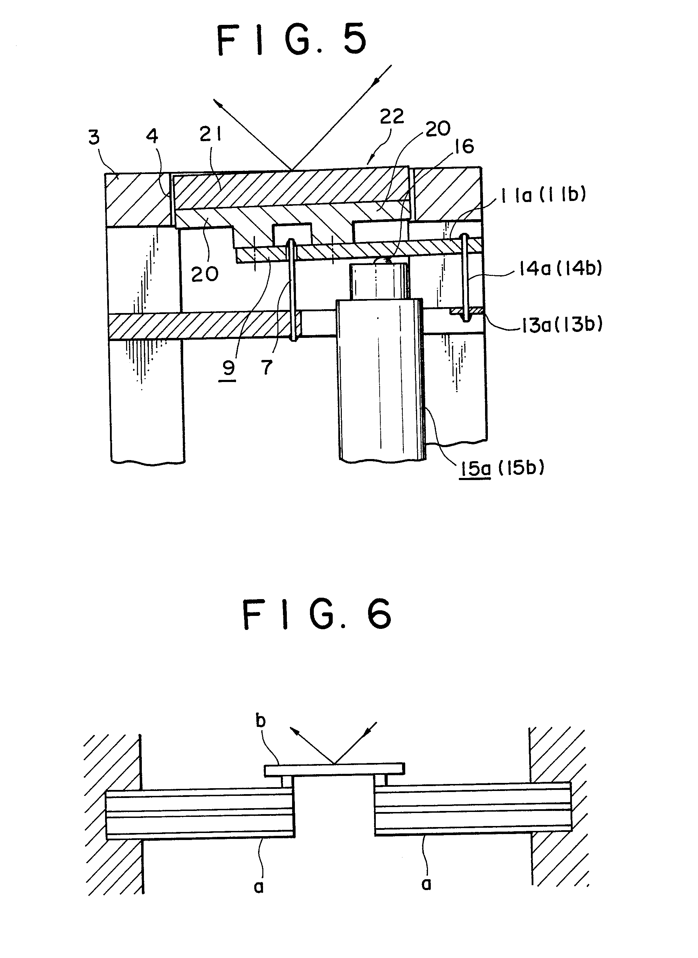

Die Wirkungsweise dieses Ausführungsbeispiels wird
nun unter Bezugnahme auf die Fig. 4 und 5 beschrieben.

Wenn keine Signalspannung vorliegt, die an die piezoelektrischen Stapel 15a und 15b angelegt ist, dann befindet sich der Spiegel 21 in einer solchen Lage, in
welcher seine reflektierende Spiegelfläche 22 bündig
mit der oberen Oberfläche der Oberplatte 3 abschließt,
wie in Fig. 4 gezeigt. Um ein Licht, das auf den Spiegel 21 einfällt, um ein bestimmtes Maß abzulenken,
wird eine bestimmte Signalspannung zwischen den Eingangsanschlüssen 18 der piezoelektrischen Stapel 15a
und 15b angelegt.

Im Ergebnis werden die piezoelektrischen Stapel 15a
und 15b verlängert, wie dies in Fig. 5 gezeigt ist.
Zu diesem Zeitpunkt verformt sich die nadelartige
Stützfeder 7 geringfügig, so daß das kippbare Teil
9, welches durch die Punktunterstützung durch die
nadelartige Stützfeder 7 abgestützt ist, die von der
Zwischenplatte 6 abragt, um die Stützfeder 7 infolge
einer Hebelwirkung gekippt werden kann. Der Spiegel
21 am kippbaren Teil 9 wird somit um die Stützfeder
7 gekippt, welche an seiner Mitte angeordnet ist, und zwar um einen Winkel, der proportional ist zur angelegten Signalspannung. Die reflektierende Spiegelfläche 22 wird somit um einen bestimmten Winkel in Richtung der x- und y-Achse entsprechend den piezoelektrischen Stapeln 15a und 15b gekippt. Das einfallende Licht wird somit in der vorgegebenen Richtung abgelenkt. Zu diesem Zeitpunkt sind die Enden des kippbaren Teiles 9 mit den Blattfedervorsprüngen 13a und 13b über die nadelartigen Verbindungsfedern 14a und 14b so gekoppelt, daß ihre leichte Verformung zugelassen ist. Deshalb werden beim Kippen des kippbaren Teiles 9 die Blattfedervorsprünge 13a und 13b nach oben gekrümmt, um das kippbare Teil 9 in der Rückführrichtung in Fig. 4 vorzuspannen. Wenn somit die piezoelektrischen Stapel 15a und 15b beim Ausbleiben der zwischen den Eingangsanschlüssen 18 angelegten Signalspannung sich wieder zusammenziehen, dann wird das kippbare Teil 9 zusammen mit dem Spiegel 21 unmittelbar in die in Fig. 4 gezeigte Lage wieder zurückgeführt.

Wie gezeigt, wird der Kippvorgang der reflektierenden Spiegelfläche 22 in Richtung der x-Achse durch die Verlängerung und Verkürzung des piezoelektrischen Stapels 15a gesteuert, und der Kippvorgang der reflektierenden Spiegelfläche 22 in Richtung der y-Achse wird durch die Verlängerung und Verkürzung des piezoelektrischen Stapels 15b gesteuert.

Der Spiegel 21 kann zusammen mit dem kippbaren Teil 9 in die Ausgangslage auch ohne die Blattfedervorsprünge 13a und 13b zurückgeführt werden, sondern nur durch die alleinige Rückführwirkung der nadelartigen Stützfeder 7. In diesem Fall ist jedoch das Ansprechverhalten ein wenig schlechter.

Wo ferner die piezoelektrischen Stapel 15a und 15b mit dem kippbaren Teil 9 über nadelartige Verbindungsfedern wie die Verbindungsfedern 14a und 14b verbunden sind, und zwar anstelle der Blattfedervorsprünge 13a und 13b, dort kann das kippbare Teil 9 gemeinsam mit den piezoelektrischen Stapeln 15a und 15b zurückgestellt werden. In diesem Fall verformen sich die Verbindungsfedern in der Querrichtung, so daß die Koppelung keinen Anlaß zu einem Problem beim Kippvorgang des kippbaren Teils 9 und der Bewegung der piezoelektrischen Stapel 15a und 15b in vertikaler Richtung gibt.

Die Signalspannungen, die an den jeweiligen piezoelektrischen Stapeln 15a und 15b angelegt werden, können verändert werden, um unterschiedliche Ausmaße und Zeitpunkte der Verlängerung und/oder Verkürzung der piezoelektrischen Stapel 15a und 15b zu liefern. Hierdurch ist es möglich, eine mehrdimensionale Kippbewegung des Spiegels 21 für unterschiedliche Kippwinkel in unterschiedlichen Richtungen entsprechend den Signalspannungen zu veranlassen. Die reflektierende Spiegelfläche 22 kann somit das einfallende Licht in jeder gewünschten Richtung ablenken. Als ein Ausführungsbeispiel ist es möglich, den Winkel eines mit hoher Frequenz pulsierenden Lichtstrahles mit befriedigenden Ansprecheigenschaften zu ändern. Während ferner die nadelartige Stützfeder 7, die von der Zwischenplatte 6 absteht, zur Abstützung des kippbaren Teils 9 verwendet wurde, ist es jedoch ebenso gut möglich, einen Mechanismus zu verwenden, der das Teil 9 an einem Punkt oder in einer schmalen Fläche abstützen kann, indem man beispielsweise die Zwischenplatte 6 mit einem konischen Vorsprung versieht, das kippbare Teil mit einer konkaven, gekrümmten Fläche zur Aufnahme des Vorsprungs versieht und Vorsprung und Aussparung in einer Schwenkzapfen-Lagerpfannen-Zuordnung miteinander koppelt.

Wie voranstehend beschrieben, wird gemäß der vorliegenden Erfindung das kippbare Teil 9, an dessen Oberseite die reflektierende Spiegelfläche 22 vorgesehen ist, durch eine Punktunterstützung abgestützt, und die piezoelektrischen Stapel 15a und 15b, die imstande sind, sich in vertikaler Richtung zu verlängern und zu verkürzen, sind auf der senkrechten x- und y-Achse vorgesehen, welche sich am Unterstützungspunkt schneiden, und zwar an Stellen, die hierzu einen Abstand aufweisen, so daß die reflektierende Spiegelfläche 22 um den Unterstützungspunkt zusammen mit der Verlängerung und Verkürzung der piezoelektrischen Stapel gekippt werden kann. Somit ist die Ablenkung nicht durch die Last auf die reflektierende Spiegelfläche 22 beeinflußt, und es kann eine hinlängliche mechanische Festigkeit sichergestellt werden. Ferner kann das Ausmaß und die Richtung der Kippbewegung der reflektierenden Spiegelfläche 22 frei mit hoher Lagegenauigkeit dadurch geändert werden, daß man die Spannungen ändert, welche an die piezoelektrischen Stapel 15a und 15b angelegt werden.

N 86 EP 102

22. Februar 1985

Anemlder:

1. NGK Spark Plug Co., Ltd., No. 14-18, Takatsuji-cho, Mizuho-ku,
   Nagoya-shi, Aichi-ken, Japan
2. Shuzo Hattori, No. 42-1, Aza-Nusasizuka, Oaza-Nagakute, Nagakute-cho,
   Aichi-gun, Aichi-ken, Japan

Patentanspruch

Lichtablenkeinrichtung, g e k e n n z e i c h n e t durch die folgenden Merkmale:

- ein kippbares Teil (9), das durch Punktabstützung abgestützt ist und an dessen Oberseite eine reflektierende Spiegelfläche (22) vorgesehen ist, und

- piezoelektrische Stapel (15a, 15b), die jeweils an einer x-Achse und einer hierzu senkrechten y-Achse vorgesehen sind, welche sich am Unterstützungspunkt schneiden, sowie an Stellen, welche gegenüber diesem einen Abstand aufweisen, und die imstande sind, in vertikaler Richtung mit Anlegung einer Spannung verlängert und verkürzt zu werden, wobei das verschiebliche Ende eines jeden piezoelektrischen Stapels (15a, 15b) mit dem kippbaren Teil (9) gekoppelt ist.

22. Februar 1985

0154870

# F I G. 1

2/4    0154870

# FIG. 2

# FIG. 3

# F I G. 4

# FIG. 5

3  4  21  22  20  16

11a (11b)

20

14a (14b)

13a (13b)

9  7

15a (15b)

# FIG. 6

b

a          a